(19) Europäisches Patentamt
European Patent Office
Office européen des brevets

(11) Publication number: **0 218 777 B1**

# EUROPEAN PATENT SPECIFICATION

(45) Date of publication of patent specification: **06.11.91**  (51) Int. Cl.⁵: **B29C 61/02**, //B29L31:60

(21) Application number: **86104466.7**

(22) Date of filing: **02.04.86**

(54) **Process for the continuous thermoforming of double tubular fabrics and device for its realization.**

(30) Priority: **16.10.85 IT 2251085**

(43) Date of publication of application:
**22.04.87 Bulletin 87/17**

(45) Publication of the grant of the patent:
**06.11.91 Bulletin 91/45**

(84) Designated Contracting States:
**AT BE CH DE FR GB LI LU NL SE**

(56) References cited:
**AT-B- 374 304**
**DE-A- 2 709 484**
**DE-A- 2 738 166**
**FR-A- 1 414 272**
**GB-A- 2 128 538**

(73) Proprietor: **TERMAR S.r.l.**
**Via Frapolli, 38**
**I-20133 Milano(IT)**

(72) Inventor: **Terzaghi, Giovanni**
**Via Frapolli, 38**
**I-20133 Milano(IT)**

(74) Representative: **Lecce, Giovanni**
**Dott. Giovanni Lecce & C. S.r.l. Via G. Negri**
**10**
**I-20123 Milano(IT)**

## Description

The present invention refers to a process involving continuous hot forming and stiffening of a double tubular fabric and a device for the realization of such process.

The process of the present invention is particularly suited for the production of multitubular sheaths for the retention of the active material in the electrods of industrial lead-acid storage batteries, namely traction or stationary batteries.

Although the present invention will be here referred to as multitubular sheaths for industrial batteries it could possibly be employed advantageously in the production of semistiff selfbearing multitubular fabrics for the filtration of gazes, liquids, sediments, etc.

The invention could also be applied to the realization of semistiff multitubular fabrics for the production of purses, baggage and light luggage in general. Industrial lead-acid storage batteries are known to be provided with positive tubular plates which offer several advantages as compared to the traditional type of pasted flat grids. In particular these are characterized by a longer lifetime, measured in terms of cycles of charge and discharge. This greater endurance is believed to be due to the fact that the positive active material, which when charged consists of contiguous crystals of lead dioxide, is retained as crystalline coherence and adhesion against the grid's plug thanks to the pressure produced by the antiacid and porous tubes which inhibit the breaking up, the transmigration and therefore the shedding and the drop towards the bottom of the container. The positive tubular plates usually consist of a certain number (usually between 15 and 19) of porous semistiff tubes with an external diameter of 9 mm made of electrolyte, a synthetic antiacid and non-polluting material. Such tubes are arranged side by side at a constant pitch, adjacent and parallel to one another, each tube being prefilled with a thin central plug of a specific lead alloy and then completely filled with lead-oxide. There are various types of tubes: they can be single or already combined in a multitubular sheath made of 15 to 19 elements. The tubes and the sheaths are made of different materials: resin-bonded spun glass fabric or braided glass fabric covered by an external perforated laminate sheath of polyvinyl cloride having a support purpose, or a fabric of polyester fibers or of mixed polyster-polypropylene fibers. The multitubular fabric which is used for the production of the tubular sheath can be obtained either directly by means of a loom utilizing polyester, glass, resin-bonded glass or mixed fibers, or by sewing together two layers of woven fabric or two layers of thin felt. The tubes are obtained by welding, sewing or other joining means two overlapped layers along parallel lines at regular and constant distance. This creates a series of flat canes equal in width, adjacent and parallel to each other, each being still separated from the adjacent ones by means of welding, seam or in the case of woven fabric by means of a thread or of the crossing of the top layer with the bottom layer at each cane.

Two are the known methods for the forming of tubular sheaths, the most often used today: a mandrel which is mobile in the furnace and a mandrel which is in a fixed position relative to the furnace. In fact all the production systems provide for the use of thermoforming mandrel operating within a furnace or heating area wherein the thermoforming (setting of the tube's shape and dimensions) occurs. In the mobile mandrel method each cane of the double tubular fabric gets filled by a proportionately fit mandrel and is transferred with it in the furnace at the established optimal temperature. Thermoforming takes place as the fabric shrinks and moulds into the shape of the mandrel within, though without a movement relative to the mandrel and without relative velocity between the two elements. A continuous transverse tubular carpet is the outcome from which strips of 15 to 19 tubes are cut in length according to the desired measure.

The advantages in this method consist in the high quality of the product obtained: under these conditions thermoforming occurs without longitudinal tension, thus conferring high degree of quality and consistency to the product.

The drawback has to be with the possibility that the spacing between the tubes is not respected because in the furnace the fabric and the mandrels are free to move, then the outcoming fabric could have a pitch between the tubes which does not correspond to the desired one and the seam could result to be on a different plane. Another drawback involves the high cost of production and operation of such apparatus which requires costly devices for the automatization of the insertion and the extraction of the mandrels as well as their return from an extraction to an insertion position.

An additional disadvantage concerns the waste of the sixteenth or twentieth tube which must be cut, thus not utilized in the production of the strips of 15 to 19 tubes from the multitubular carpet and from the strips' trim, i.e. the surplus scraps from the sheaths lengths or their multiples from the strip length. The method having the fixed mandrel within the furnace consists of an apparatus in which 15 or 19 mandrels are engaged at one end while they float at the other, as they are supported and kept at the distance necessary to obtain the required pitch between tubes. The tubular fabric is passed continuously over them after having inserted one end

2

of a fixed mandrel in each of the corresponding canes of the soft fabric. The thermoforming is obtained by dragging the sliding fabric over the mandrels through the apparatus' furnace, wherein the fabric takes the shape of the mandrels within. In this method thermoforming occurs on the mandrels with a rather high relative velocity between sliding fabric and the fixed mandrels underneath. The advantages of this apparatus are:

- a lower cost, because the apparatus is much simpler that the other system
- lower labor needed to operate the apparatus
- less wastes because the strips of fabric can be produced exactly of 15 or 19 tubes without having to discard the 16th or the 20th, and because the sheaths can be cut in the dimension needed without scraps.

This fixed mandrel method also presents a series of drawbacks which are responsible for its limited industrial diffusion. A first drawback concerns the quality of the product: the thermoforming in fact cannot result as perfect and uniform because of the axial sliding over the mandrel at the same time of the tightening of the fibers around itself. A deformation of varying degree is therefore produced on the fabric undergoing the process of thermoforming, and because of the necessity of a high speed production, especially when thermoshrinking fibers are used, a residual thermoshrinkage results axially on the fibers. In other cases an unrecovered tension occurs and the sheaths filled and mounted on the battery are able to complete their adjustement phase and their thermic axial shrinkage as soon as a high temperature is developed for various reasons inside the operating battery.

Obviously under such condition the shrinkage of the multitubular sheath within the battery causes the detachment of the bottoms and an overflow of active material which could seriously damage the battery itself.

Additional drawbacks of the fixed mandrel technology have to do with the realization of the process with the kind of device used in achieving the process.

It is known that the fixed mandrel devices include: means to feed the fabric; a blocking unit for the mandrels; a system to slide the fabric; a furnace for the thermoforming and stiffening; a cooling-finish and possibly cutting system. The critical portion of such fixed mandrel devices concerns the blocking system for the mandrels and the insufficient ability to reduce friction to the minimum in both thermoforming and blocking stations. In particular there is the friction generated by the sliding of the fabric advancement. The different parts of the device are designed to comply with the advancement friction which sometime, if not properly built, they create themselves.

The French patent number 1414272 describes a device with fixed mandrels where the blocking of the mandrel is achieved by means of a bottle-neck narrowing located in a spot on the mandrel itself and by means of a pair of blocking counterrollers which are free to rotate. These are placed over the mandrel narrowing thus preventing the passages of the end portion of the mandrel itself on the opposite side of the paired rollers.

In the case of a strong traction exerted on the mandrel, due for instance to the locking of the fabric that is thermoformed on the mandrel or to the viscosity and stickiness of the fiber's sizing agents and/or resins the mandrel's neck is brought back at once toward the counterrollers and it penetrates into them pressing against the fabric thus preventing it from sliding.

The friction problem is mentioned also in the German patent number 2738166 and in the Austrian patent number 374304 which propose to lock the mandrels through a system of hooks.

Such system is very similar to the one described in the British patent 1574722 and 1551798 which presents the following drawbacks: the squeezing against dragging rollers of a portion of the fabric entering the apparatus develops differential forces on the fabric having origin at the mandrel fabric interface, and creates also rolling friction forces due to the compression and dragging of the roller. The fabric must slide on the mandrel for as much as 1/4 of the length of the dragging roller's circumference. Besides friction difficulties there are therefore problems regarding creases and curls or the development of tensions which lead to inevitable deformations in the structure of the fabric.

The German patent number 3238838 also proposes an "S" shaped system for the blocking of the mandrel, but even in this case the already elucidated problems persist if not increased as the fabric runs on a longer distance over the mandrel and is pressed by the advancing rollers against the mandrel itself.

In particular the already mentioned British patent number 1574722 and 1551798 describe a process and a product which do not lack difficulties. More specifically the British patent 1574722 states that if the battery works in a warm environment, such as the tropics, the finished product, that is the sheath, could present a loss of dimensional stability which could endanger the life of the battery itself. An attempt to face this problem has been made through the utilization of a fourfold fabric which has an additional external layer on both sides for a greater mechanical support and an internal filtering layer.

A similar fabric is not economical and has evident and recognized limitations of employment.

The process described in these British patents is very similar to the ones reported above, it therefore presents the same drawbacks.

The object of the present invention is to provide an apparatus with simple fixed mandrels capable of producing a multitubular sheath at great production speed and low costs which would be particularly suited to bear high temperatures and well as heavy operating conditions. Another objective of the present invention is to provide a process for the production of multitubular sheaths and in particular those bound to be utilized in the lead-acid industrial batteries with no residual tensions and a device for the actualization of such process.

An additional object of the present invention is to manufacture, at low installation and operating cost, a multitubular sheath with a very stable structure, which offers a high porosity and at the same time a high compactness of the fabric.

According to the present invention, these and other objects are achieved by a process having the features recited in the characterizing part of claim 1.

The process of the present invention carries out the heat setting of the fabric running over fixed mandrels inserted into the tubes of the fabric.

The fabric is woven and consists, along the running direction, of polyester, high tenacity, continuous, multifilament yarns which are not thermoshrinkable and have from 200 to 400 twists/inc and, in the direction transversal to the running axis, of thermoshrinkable yarns. The fabric slides between roller-bearings, placed on the surface of each mandrel and free counter-rollers, placed at the opposite side of the fabric.

The soft fabric can be impregnated with a thermoplastic, thermosetting or phenolic base resin.

The device for the continuous thermoforming of a double tubular fabric for the manufacture of multitubular sheats, according to the present invention is defined in claim 3. It comprises: a feeding station, a blocking station, means for the advancement of the fabric, a thermoforming oven, optionally a cooling station, a cutting stattion (F), and fixed mandrels extending from the blocking station to the cooling station, wherein each mandrel has a cross-section shape conform to the requested cross-section of each tube of the sheat in the thermoforming oven and a polygonal cross-section, preferably a rectangular cross-section, in the blocking station; said polygonal cross-section portion of each mandrel contaoning at least two roller-hearings mounted on opposite faces of the mandrel. In the device of the present invention, the blocking station comprises at least two counter-rollers, free to rota te about their axis, arranged at opposite faces of the fabric, having their circumferences distant from the external diameter of the mandrel and their rotation axes on a plane which is inclined or perpendicular with respect to the plane of advancement of the fabric; the roller-bearings being in contact with the respective counter-rollers in a circumferential zone wherein the fabric is inserted.

The system of engaging prevents the mandrels to be pulled inside the device by the friction forces exerted by them on the fabric that is shape-formed in the hot portion of the oven and that tightens around them. This roller-bearing fixing system grants the simple flow without rolling friction and with pure revolving friction in a critical spot where the fabric is retained with strength by the mandrel blocking section. After the mandrel's revolving section the fabric runs through the thermoforming area, where the fabric shrinks over the mandrels and the eventual size contained in it polymerize and/or condensate without relevant or ununiform tensions.

The fabrix is then cooled by the action of low temperature of fluids. Once it becomes perfectly rigid it is cut into pieces of the required length. The multitubular sheath used in the here present invention process involves continuous and high tenacity multifilament yarns which run parallel to the central axis of each tube. The yarns are already prefixed they have no residual thermoshrinkage, have a high degree of elasticity regarding deformations below 5% and they are stabilized and stiffened through a treatment of torsion and thermofixing at high temperature.

The existance of these yarns allows to exert axially a perfectly elastic traction of the fabric without producing local non reversable deformations. The required degree of elasticity of the yarn is given by an adequate number of torsions per centimetre.

The multifilament yarns consist of a great number of single equal and parallel filaments that allow to confer different characteristics to the yarn through suitable torsion.

The use of multifilament yarns which have undergone a high torsion allows also to obtain multitubular sheaths with a great fabric compactness and at the same time a high porosity. These combined characteristics provide the sheath with a great resistance to oxidation, due to the large number of threads per square centimetre.

The high porosity is due to the fact that under torsion the thread becomes compact and is able to conserve a shape with elliptical or oval section instead of being flattened out on the mandrel. Therefore it is possible to insert more threads per linear centimetre for a given yarn denier. The result is a highly resistant compact and porous fabric.

It is intentionally emphasized that when the multitubular fabric to be thermo-formed is composed of non woven fabrics which have been sewn together or when the fabric is made of short fibers arranged along the direction of the tube's axis and held together by appropriate resins or by treatment that cause a partial fusion of part of the fabrics fibers, the traction exerted in dragging the fabric over the mandrels causes permanent deformations if the stresses get over a certain value, easily reached when operating a high temperature.

It's easily noticed from the known load-elongation (stress-strain) curve of the above materials that these deformation values are very low. It often happens that these phenomena of irregular and permanent deformation occur during the working procedure.

In addition traction can cause a permanent deformation for the dragging of the fibers in the fabric and for the lack of a return after the thermoformation when the fabrics used contain spun-threads, made with short interwoven fibers, parallel to the tube's axis. This can be easily put into evidence by examining the strain-stress values of the spun-threads. When these values are in fact compared to those of high tenacity filament yarns it is easy to notice the different efficiency for this specific application.

In case of elongations ranging up to 5-6% of the original length a high tenacity yarn with a torsion value of 150 to 300 twists/inch still retains a perfect elasticity and therefore returns to its original length after the action of the stress. In addition it has a value of tensile strength 2-3 times greater than that of the best existing short-fiber yarns. As far as other short-fiber yarns are concerned it is shown in the diagram above that low loads corresponding to elongations of 1.5-2% already produce permanent deformations. In addition in order to obtain high speed production the fabric must rapidly run over the forming mandrels, therefore, In the dragging process traction generating systems capable of dragging the fabric at an appropriate speed is necessary. When the friction problems occur these advancement systems cause the above deformations often with different degree on each tube. It can also happen that if the velocity is too high to allow the complete thermo-shrinkage of the yarns used, some of the multitubular sheaths that have been held under tension and exposed to temperatures of 80-100° during their preparation of the plates and during the charge and discharge cycles of the batteries are now free to shrink and to recover their thermo-shrinkage strength under the effect of high temperatures. This causes the shortening of the multitubular sheath and results in the partial exposure of the plug thus causing an overflow of the active material on the bottom of the plate.

All these drawbacks can be solved by the present invention by the use of a multitubular sheath consisting only of high tenacity multifilament yarns, preferably of polyester, arranged vertically to the tube and parallel to its central axis. These yarns are adequately twisted with a high torsion value, they are thermofixed and preferably treated with phenolic, epoxidic or other resins which will increase their stiffness and eliminate their thermo-shrinkage even at temperatures near their melting point (200-230°). The above yarns, particularly under a torsion of 200 to 400 twists, present a greater elasticity and a consequent elongation in the elastic range of 10% of the original length.

Resin-bonded chemical glass filaments could also be employed with less satisfying results.

Transversally the multitubular sheaths can consist of either polyster thermoshrinking filaments or mixed short fibers threads containing thermoshrinking polyster and polypropylene which causes the bonding and stiffing of the polyster fibers by melding at the high thermoforming temperatures. The present invention refers also to the continuous high speed hot thermoforming process of a soft tubular fabric which takes the shape of a stiff self-bearing multitubular sheath consisting of numerous equal and adjacent tubes attached to each other. The main features of such process is the sliding without relevant friction of the fabric around the mandrels which in turn are engaged at one end by a small and simple system of roller bearings that are fixed opposite to each other on the mandrel itself and by a couple of counter-rollers, free to rotate around their axis. When the fabric is advanced on the mandrels these tend to be dragged inside the thermoforming unit. Instead according to the invention, the two ball-bearings meet the two free rollers and by rotating they allow the fabric to slide smoothly between them. In this position friction is reduced to revolving friction at the tangency of the two sets.

In the device of the present invention, the feeding station can be of any kind and generally a cloth unwinder is used. Means for the strip advancement consist of pressure rolls, due to lack of relevant frictions, in the known art these means consisted of long needles or clasp systems on the strip sides. The blocking of the mandrels is obtained by means of roll bearings inserted in each mandrel.

The mandrel is generally two meters long, has a circular section end and an initial portion of rectangular section.

The thermoforming procedure includes the feeding of the soft fabric comprising a 15 or 19 parallel and adjacent canes; the insertion of a thermoforming mandrel in each cane and the sliding of the fabric around the fixed mandrels into a thermoforming oven.

For a better understanding of the functional and structural characteristics of the thermoforming device which is the object of the present invention, we report below its detailed description with reference to the figures which illustrate the apparatus in a schematic but not limiting exemplification.

In the diagrams:

- figure 1 shows the lateral schematic view of the thermoforming unit which is the object of the present invention;
- figure 2 represents the lateral schematic view of the longitudinal section of the mandrel blocking device by means of cylindrical roller bearing;
- figure 3 illustrates the schematic view of the cross section of the blocking device described in Fig. 2, seen from the side where the multitubular fabric is fed.
- figure 4 represents a cross section schematic view for the feeding station of the multitubular fabric strip, showing the blocking device provided with mandrels of rectangular section, spherical roller bearings and cylindrical counter rollers with complimentary spherical roller bearings;
- figure 5 represents a schematic view of the longitudinal sections of the mandrel in the cooling station (E, fig. 1)

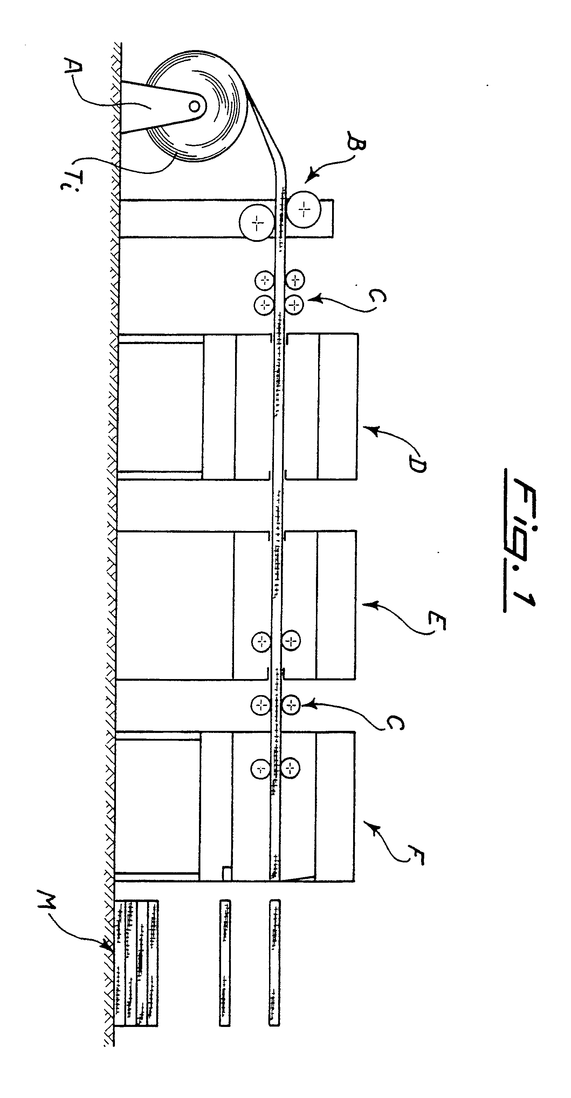

Figure 1 illustrates in a schematic way the sequence of the stations for the thermoforming treatment of a multitubular soft woven fabric consisting of non thermoshrinkable multifilament yarns or preshrinked yarns along the length of the fabric.

The multitubular fabric, optionally impregnated with thermosetting resins or with resins that can be polycondensed with heat is collected on bobbins (Ti) that can be loaded within the supports of the feeding station A. The fabric is fitted (manually at the start of the process) on the crown of the selflocking mandrels in station B, dragged by the advancement station C, and sliding over the mandrels it is fed into the thermoshrinking and thermoforming station D. The dragging system in station C, can be placed either before or after the termoforming station D. Subsequently the fabric is passed through station E supplied with a forced cooling system and then to a station F where the strips are cut transversally accordingly to the dimensions needed for the sheaths.

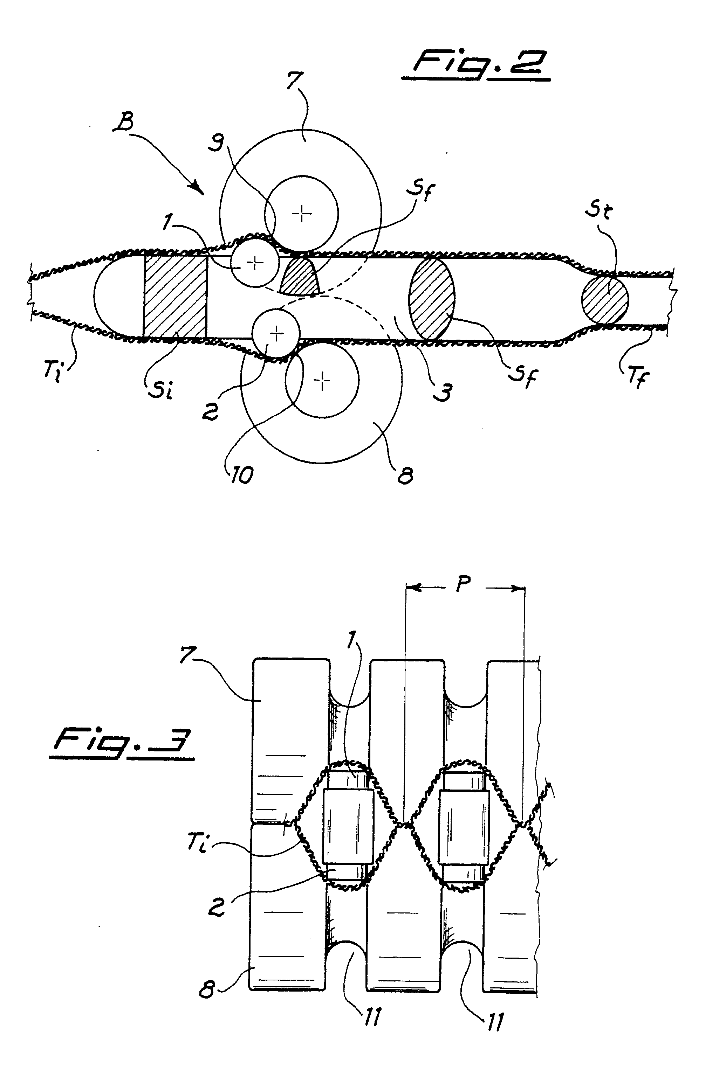

Once cut the sheaths are fed into a transportation and storage system M. The structural details of the stations for the realization of the device, which is the object of the present invention, are illustrated in figures 2-3-4-5.

Figure 2 represents a longitudinal section of the blocking station B where the mandrels are fixed in relation to the thermoforming furnace D without creating ununiformally distributed friction along the width of the fabric. The strip of the produced semirigid fabric is generally made of 15 to 19 parallel tubes which must have a stable and correct measure, a constant pitch between tubes and seams on the same plane. This is achieved by using a mandrel (3) which is shaped in the desired form (St) at the end, in the station D, and it is polygonally shaped, such as rectangularly shaped (Si) in the blocking station B. The rectangular or polygonal shape is suited to contain two roller bearing 1 and 2. These bearings rotate when pulled by the sliding fabric until they collide with free counterrollers 7 and 8 on which rest 9 and 10 causing their rotation at equal periferal velocity. Meanwhile the fabric runs through them without rolling friction. The counterrollers 7 and 8 are placed at opposite sides of the fabric, their relative circumferences are distant from the external diameter of the mandrel, and their rotation axis are on a plane perpendicular or inclined in relation to the elongation axis of the fabric. The projection of the roller-bearings 1 and 2 and the profiling of the inetermediate sections Sf allow the fabric's seams to be aligned on the intertaxes which are expected for the end portion. On the contrary in the area below the block B and above the shrinkage area D the fabric remains soft and it never curls.

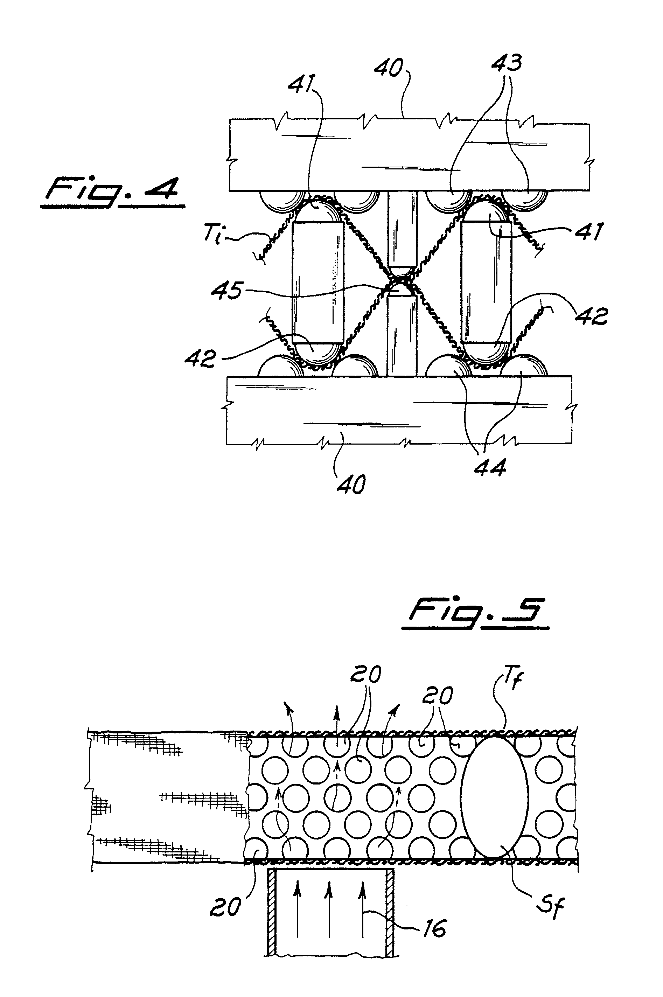

Figure 3 represents the cross section of counter-rollers 7 and 8, which have two mouldings 11 responsible for the local contacts 9 and 10 and for the lateral adjustement forward of the fabric necessary for the constant pitch P of two contiguous seams.

The roller bearings 1 and 2 can be bearings with different profiles even though a cylindrical one is preferred.

A meridian profile with laterally troncated ellipse within the channels 11 that are extended to the seams can be used.

Counter rollers 7 and 8 overlapped and parallel in neutral have a surface grooved at regular intervals and preferably elliptically moulded grooves with the minor axis of the ellipse equal to the pitch of the finished sheaths and the long axis increased of a lenght sufficient to pull slightly the soft fabric; the profile of such grooves contrast with the transversal profile of the roller-bearings which should preferably be elliptical, with axis on the mandrel and should interfere with those rollers.

The roller bearing can be fabricated in antiscuff material with or without pivots or rolling elements, or they can be made of spherical or roller microbearing. In addition it is possible, as illustrated in a variation in figure 4, to substitute the roller bearings with spheres 41 and 42, that roll inside the mandrel and interfering with a couple of spheres 43 and 44 that roll within fixed supports 40. In addition two more spherical revolving bearings 45 lead the mutlitubular fabric maintaining the predetermined pitch between tubes. These spheres project for at least a third of their diameter from the mandrel's profile.

The blocking station of the mandrels can be formed by a pair of parallel overlapping bars with more spheres set in special fixtures carved in the bars on the side facing the other bar. The fixtures must be spaced at adequate intervals so that at least two spheres contrast with the elliptical profile bearing or with a sphere set into the mandrels.

Because of the extremely low friction that these systems produce on the sliding of the fabric over the mandrels, the uniform advancement of the whole fabric becomes very simple. In addition there is no need for specific lateral selvedge with a too local traction nor for needles that induce a sliding of the woof's threads and create anomalous lights by penetrating into the fabric.

In the process of advancement in the zone C, below and above the oven D, and in the cooling station E, it is sufficient the use of a pair of moulded and slightly knurled rollers preferably made of silicone rubber.

Through the use of these paired rollers the traction, which is reduced in value, is elastically supported by the non plasticized axial yarns and is exerted uniformly on the entire surface of the fabric without causing any axial or plane distorsion.

Owing to the presence of axial not heatshrinkable yarns, be heatshrinked the thermoforming station D can have a rather high temperature (200°C for polyester fibers) with a forced hot air which facilitates the complete shrinkage of the cross shrinkable yarns, without affecting the mechanical characteristics of the axial non-shrinkable yarns. In the thermoforming systems involving the heating of mandrel 3 either by of inner resistence or by induction can be used. Infrared wave systems can also be utilized: in this case the adequate choice of the position of the lamps (possibly in ceramic) and the temperature of the lamps (600-800°C) can allow a high speed production.

When in the thermoforming station it is used a multitubular fabric composed in part or solely of polyester, a loss in tenacity can occur due to two reasons: temperature and presence of a metallic mandrel.

Polyester is in fact known to have a good resistance to temperature in hot air while it shows a rapid drop in tenacity when put into direct contact with metallic surfaces at the same temperature (ironing effect). In the literature these phenomena, and specifically the temperature ranges in which such phenomena occur, are described.

According to the present invention high resistance multitubular sheaths, which have a high tenacity and high resistance to bursting even after thermoforming, are obtained (section D figure 1) utilizing a mandrel of a non-conductive material, as wood, ceramic, etc. whose surface has been adequately smoothed to favour the sliding of the fabric.

Mandrels made out of anti-adherent plastics with high melting points and with a very low thermic capacity have been succesfully used. Section E of figure 1 provides a cooling station. Such cooling station is not necessary when the fabric is impregnated with thermosetting resins.

In this case in fact at the end of section D, after the process of polymerization and of thermosetting is completed, the multitubular sheath has already reached a degree of stiffness sufficient to be dragged rapidly and to be cut since its shape is set. In case of the employment of fabrics impregnated with thermoplastic resins it is necessary to cool them below the softening temperature immediately after they come out of thermoforming in order to give the product the shape obtained in a stable and durable way.

In this case, in order to obtain in a continuous and rapid way and at low cost multitubular sheaths it is better to use in the thermoforming device a high efficiency cooling system. Such system is illustrated in details in figure 5 where the final section Sf, of one of the thermoforming mandrels is magnified.

In the cooling station E the mandrel has a geometrical shape that is exactly calibrated as to give the required shape of the tube, and it shows a series of circular holes which allow the flow of low temperature air (preferably minus 20°C to +5°C). This air passes through the mesh of the fabric Ti inside the pierced mandrel Sf and is spread in every direction to cool both mandrel and the fabric Tf which forms the surface of the mutlitubular sheath's tube.

The description below is an exemplification of the possible embodiments of the process and apparatus of the present invention.

A roll containing a woven fabric, consisting of high tenacity yarns (550 dTex each) made on a loom, is prepared. The high tenacity thermoshrinkable yarns are arranged transversally in relation to the advancement system, while the high tenacity thermostable yarns with a high torsion value are arrange longitudinally, that is along the advancement direction of the device. For example the fabric can have 18 yarns/cm transversally and 18 yarns/cm with a torsion of 300 twists/inch longitudinally. The fabric is then impregnated with an aqueous dispersion of acrilic base resin having a density of 1.10 kg/dm$^3$, a viscosity of 3000 CP (Brookfield: II/6) and a pH of 7.5;

The fabric is fed on a device made for example of 19 thermoforming mandrels, that are 3 meters in lenght.

Each mandrel is composed of various contiguous sections. Each of these sections arranged in sequence, can have a geometrical shape different from the adjacent ones and can be made of different material and shape from the two adjacent sections. The terminal portion of each mandrel must have the requested section, generally circular for standard sheaths.

If the tip of the mandrel has a diameter of 8.4 mm the rectangular initial end can have sides of 8 mm and 6 mm.

The sides measuring 6 mm are provided with two roller-bearing 1 and 2 of figure 2 and figure 3 of the diameter of 9 mm. The two roller-bearings are arranged so that their rotation axis is parallel to the 6 mm face. The roller bearings are not aligned in relation to the 8 mm face but they are shifted so that the bearing 1 gets to be behind the bearing 2.

This allows to use bearings having up to 12 mm of diameter each. The two counter-rollers 7, 8 are shaped in such way as to block the tip of the mandrel containing the roller-bearings 1,2.

The pair of counter-rollers are then lifted and the thermoforming mandrels 3 are inserted one into each of the corresponding cane of the multitubular soft fabric. Tha fabric is then pulled forward manually into position C of figure 1. The blocking rollers are lowered and the mechanism is started manually until the thermoforming occurs in section D and the cooling and stiffening of the multitubular sheath occur in E.

At this point the advancement system C is able to grip the sheath, to cause the sliding of the fabric on the mandrels and to allow the starting and the continuous production until the end of the fabric roll.

## Claims

1. A process for continuous thermoforming a double tubular fabric for the manufacture of multitubular sheaths free from any residual axial tension, the process comprising the heat setting of the fabric running over fixed mandrels inserted into the tubes of the fabric, characterized in that the fabric is woven and consists, along the running direction, of polyester, high tenacity, continuous, multifilament yarns which are not thermoshrinkable and have from 200 to 400 twists/inc and, in the direction transversal to the running axis, of thermoshrinkable yarns, and in that the fabric slides between roller-bearings (1,2), placed on the surface of each mandrel (3), and free counter-rollers (7,8), placed at the opposite side of the fabric.

2. The process according to claim 1, wherein the double tubular fabric is impregnated with a thermoplastic, thermosetting or phenolic base resin.

3. A device for the continuous thermoforming of a double tubular fabric for the manufacture of multitubular sheaths by a process comprising the heat-setting of the fabric running over fixed mandrels inserted into the tubes of the fabric, the device comprising: a feeding station (A), a blocking station (B), means (C) for the advancement of the fabric, a thermoforming oven (D), optionally a cooling station (E), a cutting station (F), and fixed mandrels (3) extending from the blocking station (B) to the cooling station (E), characterized in that each mandrel (3) has a cross-section a shape (St) conforming to the required cross-section of each tube of the sheath in the thermoforming oven (D) and a polygonal cross-section (Si), preferably a rectangular cross-section, in the blocking station (D), said polygonal cross-section portion (Si) of each mandrel (3) containing at least two roller-bearings (1,2) mounted on opposite faces of the mandrel (3); and in that the blocking station (B) comprises at least two counter-rollers (7,8), free to rotate about their axis, arranged at opposite faces of the fabric, having their circumferences distant from the external diameter of the mandrel (3) and their rotation axes on a plane which is inclined or perpendicular with respect to the plane of advancement of the fabric; the roller-bearings (1,2) being in contact with the respective counter-rollers (7,8) in a circumferential zone (9,10) wherein the fabric is inserted.

4. The device according to claim 3, wherein the surface of the counter-rollers (7,8) of the blocking station (B) is provided with grooves arranged at regular intervals and the grooves of two opposite, contrasting counter-rollers (7,8) shape an ellipse (Sf), the lower axis thereof being equal to the diameter of the sheath (Tf) and the higher axis having a lenght to draw the feed fabric which is in the floss state; against the profile of the grooves contrasting the roller-bearings (1,2).

5. The device according to claim 4, wherein the roller-bearings (1,2) have an elliptical cross-section shape with the axis arranged on the mandred (3).

6. The device according to claim 3, wherein the roller-bearings (1,2) consist of spheres (41,42) projecting of at least one third of their diameter from the surface of the mandrel (3) and free to rotate within housing inside the mandrel (3).

7. The device according to claim 3 or 6, wherein the blocking station (B) consists of two opposed parallel bars (40), each bar (40) supporting on its side facing surface several spheres (43,44) set in seats of the bar and spaced to each other so that two adjacent spheres contract with the profile of the corresponding bearings (1,2) or with the spheres (41,42) arranged on the mandrel (3).

8. The device according to claim 7, wherein each bar (40) is provided with spherical revolving bearings (45) to maintain the predetermined pitch between the tubes of the fabric.

9. The device according to anyone of the preceding claims from 3 to 8, wherein the mandrel (3) is made of a non-conductive material with low thermic capacity and high melting point, in the thermoforming oven (D).

10. The device according to anyone of the preceding claims from 3 to 9, wherein the final portion of the mandrel (5) in the cooling station (E) is provided with holes (20) through which the cooling flux (16), air cold from preferably -20°C to +5°C, flows.-

## Revendications

1. Un procédé pour le thermoformage continu de tissu tubulaire double pour la fabrication de revêtements multitubulaires sans aucune tension axiale résidue, le procédé comprenant le réglage de chaleur du tissu qui passe sur des mandrins fixés introduits dans les tubes du tissu, caractérisé par le fait que le tissu est tissé et composé, le long de la direction de marche, de filés a plusieurs fils, continus, à haute résistance à la rupture, de polyester qui ne sont pas thermo-irrétrécissables et qui ont de 200 à 400 torsions/ et, dans la direction transversale à l'axe de marche, de filés thermo-irrétrécissables, et que le tissu glisse entre des roulements à galats (1,2), placés sur la surface de chaque mandrin (3), et des contre roulements libres (7,8), placés sur le côté opposé du tissu.

2. Le procédé d'après la revendication 1, où le tissu tubulaire double est imprégné d'une résine à base de phénol, thermodurcissable et thermoplastique.

3. Un dispositif pour le thermoformage continu d'un tissu tubulaire double pour la production de revêtements multitubulaires par un procédé comprenant le réglage de la chaleur du tissu qui passe sur des mandrins fixes introduits dans les tubes du tissu, le dispositif comprend: une station d'alimentation (A), une station de blocage (B), des moyens (C) pour l'avancement du tissu, un four de thermoformage (D), une station de refroidissement optionnelle (E), une station de coupe (F), et des mandrins fixés (3) s'étendant de la station de blocage (B) à la station de refroidissement (E), caractérisé par le fait que chaque mandrin (3) a une forme en section transversale (St) se conformant à la section transversale demandée de chaque tube du revêtement dans le four de thermoformage (D) et une section transversale polygonale (Si), de préférence une section transversale rectangulaire, dans la station de blocage (D), ladite partie à section transversale polygonale (Si) de chaque mandrin (3) contenant au moins deux roulements à galats (1,2) montée sur des faces opposés du mandrin (3); et dans le fait que la station de blocage (B) comprend au moins deux contre roulements (7,8), qui tournent librement sur leur axe, placés aux faces opposées du tissu, ayant leur circonférence lointaine du diamètre extérieur du mandrin (3) et leurs axes de rotation sur un plan qui est incliné ou perpendiculaire par rapport au plan d'avancement du tissu; les roulements à galats (1,2) étant en contact avec les contre roulements respectifs (7,8) dans un zone de circonférence (9,10) où le tissu est introduit.

4. Le dispositif d'après la revendication 3, où la surface des contre roulements (7,8) de la station de blocage (B) est dotée de rainures placées à des intervalles réguliers et les rainures des deux contre roulements (7,8) opposés, de contraste, forment une ellipse (Sf), l'axe plus bas étant égal au diamètre du revêtement (Tf) et l'axe plus haut ayant une longueur pour porter le tissu alimenté qui se trouve dans l'état de bourre; contre le profil des rainures qui contrastent les roulements à galats (1,2).

5. Le dispositif d'après la revendication 4, où les roulements à galats (1,2) ont une forme à section transversale elliptique avec l'axe placé sur le mandrin (3).

6. Le dispositif d'après la revendication 3, où les roulements à galats (1,2) consistent de billes (41,42) en saillie d'au moins un tiers de leur diamètre de la surface du mandrin (3) et pouvant tourner librement dans l'enveloppe à l'intérieur du mandrin (3).

7. Le dispositif d'après les revendications 3 ou 6, où la station de blocage (B) consiste de deux barres opposées parallèles (40), chaque barre (40) supportant sur sa surface de face de côté plusieurs billes (43,44) placées dans des logements de la barre et espacées l'une de l'autre de sorte à ce que les deux billes adjacentes contrastent avec le profil des roulements correspondants (1,2) ou avec les billes (41,42) placées sur le mandrin (3).

8. Le dispositif d'après la revendication 7, où chaque barre (40) est dotée de roulements orientables sphériques (45) pour maintenir le pas prédéterminé entre les tubes du tissu.

9. Le dispositif d'après n'importe quelle des revendications précédentes allant de 3 à 8, où le mandrin (3) est fait d'une matière non conductrice avec une capacité thermique basse et un point de fusion haut, dans le four de thermoformage (D).

10. Le dispositif d'après n'importe quelle des revendications précédentes allant de 3 à 9, où la partie finale du mandrin (5) dans la station de refroidissement (E) est dotée de trous (20) à travers lesquels le flux de refroidissement (16), air froid allant de préférence de -20°C à +5°C, passe.-

## Patentansprüche

1. Ein Verfahren zum durchgehenden Thermoformen Von einem Doppelröhrenstoff zur Herstellung von Vielröhrenhüllen, frei von jeglicher Restachsenspannung; das Verfahren umfaßt die Wärmehärtung des Stoffs, der über feste, in die Röhren eingesetzte Spindeln läuft, gekennzeichnet dadurch, daß oder Stoff gewebt ist und längs der Laufrichtung aus Polyester und sehr haftfesten durchgehenden Vielfadengarnen besteht, die nicht wärmeschrumpfend sind und von 200 bis zu 400 Drallen haben, und außerdem in der Querrichtung zur Laufachse aus wärmeschrumpfenden Garnen besteht; darüber hinaus gekennzeichnet durch die Stoffläufer zwischen Rollenlagern (1, 2), die an der Oberfläche einer jeden Spindel (3) angebracht sind, und freie Gegenrollen (7, 8), die auf der gegenüberliegenden Seite des Stoffs angebracht sind.

2. Das Verfahren entsprechend Patentanspruch 1, wobei der Doppelröhrenstoff mit einem nichthärtenden Harz, wärmehärtendem Harz oder Harz auf Phenolbasis imprägniert ist.

3. Eine Vorrichtung zum durchgehenden Thermoformen eines Doppelröhrensstoffs zur Herstellung von Vielröhrenhüllen durch ein Verfahren, das die Wärmehärtung des Stoffs umfaßt, der über feste, in den Röhren des Stoffs angebrachte Spindeln läuft; die Vorrichtung besteht aus: einer Zufuhrstation (A), einer Blockierstation (B), Mitteln (C) für den Vorschub des Stoffs, einem Thermoofen (D), einer zusätzlichen Kühlstation (E), einer Schneidstation (F) und festen Spindeln (3), die von der Blockierstation (B) bis zur Kühlstation (E) reichen, gekennzeichnet dadurch, daß jede Spindel (3) eine Kreuzform (St) hat, entsprechend dem erforderlichen Querschnitt einer jeden Röhre der Hülle in dem Thermoformofen (D) und einen polygonalen Querschnitt (Si) hat, vorzugsweise einen rechteckigen Querschnitt in der Blockierstation (D); dieser polygonale Querschnittsteil (Si) einer jeden Spindel (3) enthält mindestens zwei Rollenlager (1, 2), die an der gegenüberliegenden Seite der Spindel (3) angebracht sind; und gekennzeichnet dadurch, daß die Blockierstation (B) mindestens zwei Gegenlager (7, 8) enthält, die sich frei um ihre Achse drehen können und an den gegenüberliegenden Seiten des Stoffs angebracht sind, da sie ihre Kreislinien vom äußeren Durchmesser der Spindel (3) entfernt und ihre Drehachsen auf einer Fläche haben, die schräg oder senkrecht im Verhältnis zur Vorschubfläche des Stoffs ist und da die Rollenlager (1, 2) mit den entsprechenden Gegenrollen (7, 8) in einem Kreisumfangsbereich (9, 10), in den der Stoff eingesetzt ist, in Verbindung stehen.

4. Die Vorrichtung entsprechend Patentanspruch 3, wobei die Fläche der Gegenrollen (7, 8) der Blockierstation (B) mit Nuten versehen ist, die in gleichmäßigen Abständen angebracht sind, und die Nuten von zwei gegenüberliegenden und entgegengesetzten Gegenrollen (7, 8) bilden eine Ellipse (Sf), die untere Achse ist daher gleich dem Durchmesser der Hülle (Tf) und die obere Achse hat eine Länge, die die Stoffzufuhrzieht, die im Gratzustand ist; gegen das Profil der Nuten, den Rollenlagern (1, 2) entgegengesetzt.

5. Die Vorrichtung entsprechend Patentanspruch 4, wobei die Rollenlager (1, 2) eine elliptische Kreuzform zur an der Spindel (3) befindlichen Achse haben.

6. Die Vorrichtung entsprechend Patentanspruch 3, wobei die Rollenlager (1, 2) aus Kugeln (41, 42) bestehen, die um mindestens ein Drittel ihres Durchmessers von der Oberfläche der Spindel (3) hervorspringen und die sich innerhalb des Lagers im Innern der Spindel (3) frei drehen können.

7. Die Vorrichtung gemäß Patentanspruch 3 oder 6, wobei die Blockierstation (B) aus zwei entgegengesetzten parallelen Stangen (40) besteht; jede Stange (40) hat an ihrer Seitenfläche verschiedene Kugeln (43, 44), die in den Halterungen der Stangen und in einem solchen Abstand angebracht sind, daß zwei nebeneinanderliegende Kugeln die Profile der entsprechenden Lager (1, 2) oder die an der Spindel (3) angebrachten Kugeln (41, 42) berühren.

8. Die Vorrichtung entsprechend Patentanspruch 7, wobei jede Stange (40) mit Drehkugellagern (45) versehen ist, die den vorausbestimmten Abstand zwischen den Röhren des Stoffs beibehalten.

9. Die Vorrichtung entsprechend jeglichem der vorhergehenden Patentansprüche von 3 bis 8, wobei die Spindel (3) aus einem nichtleitenden Material mit geringer Wärmekapazität und hohem Schmelzpunkt in dem Thermoformofen (D) gemacht ist.

10. Die Vorrichtung entsprechend jeglichem der vorhergehenden Patentansprüche von 3 bis 9, wobei der Endteil der Spindel (5) in der Kühlstation (E) mit Löchern (20) versehen ist, durch die der Kühlstrom (16), Kaltluft, von vorzugsweise -20$^\circ$C bis zu +5$^\circ$C fließt.

*Fig.1*

*Fig.2*

*Fig.3*

_Fig.4_

_Fig.5_